# EUROPEAN PATENT APPLICATION

(11) **EP 4 726 791 A1**
(43) Date of publication of application: **15.04.2026**
(21) Application number: 25164364.9
(22) Date of filing: 18.03.2025
(51) Int. Cl.: H01M 4/04, H01M 10/04, H01M 10/0525, H01M 10/0585, B01J 23/745, B01J 23/75, B01J 23/755, B01J 23/84

(54) **BATTERY CORE AND PREPARATION METHOD THEREFOR**

(30) Priority: 11.10.2024 CN 202411419685
(71) Applicant: Zhejiang Jinko Energy Storage Co., Ltd., Jiaxing, Zhejiang 314415 (CN)
(72) Inventor: ZHANG, Longtao, Haining City, Jiaxing, Zhejiang, 314415 (CN); YANG, Zixiang, Haining City, Jiaxing, Zhejiang, 314415 (CN)
(74) Representative: Herrero & Asociados, S.L.

(57) **Abstract**

The present application provides a battery core and a preparation method therefor. The preparation method of the battery core includes following steps: after stacking a positive electrode sheet, a negative electrode sheet, and a separator into a stacked battery core, sequentially preforming tab welding, encapsulation, injection, formation, and vacuum-sealing on the stacked battery core, and obtaining the battery core, wherein the positive electrode sheet is obtained by coating a positive slurry on a positive electrode current collector, and laminating and drying same. The positive slurry includes a positive electrode active material and a lithium supplement agent. After the encapsulation and before the injection, the method further includes a step of preparing a catalyst comprising: sequentially injecting a catalyst precursor solution into an encapsulated battery core and performing a standing treatment, applying a current or voltage to the battery core after standing, and removing the catalyst precursor solution, in a process of applying the current or voltage to the battery core after standing, a catalyst precursor in the catalyst precursor solution undergoes a reaction and adheres to a surface of the positive electrode sheet thereby forming a catalyst. The voltage ranges from -2.5 V to 0 V.

## Description

### TECHNICAL FIELD

The present application relates to the field of energy storage battery core technology, and in particular, to a battery core and a preparation method therefor.

### BACKGROUND

A lithium supplement agent may enhance a performance of a battery core. However, a present lithium supplement agent requires a higher potential window to fully release lithium ions, which may lead to a certain degree of electrolyte decomposition, resulting in an impact on performances of a battery.

At present, a conventional method to solve the above problems is to synthesize a catalyst that promotes a decomposition of the lithium supplement agent separately, and then mix a synthesized catalyst with the lithium supplement agent (lithium rich materials) to form a lithium supplement material. This solution may reduce the potential window required for the lithium supplement agent to a certain extent, however, due to a complicated synthesis process of the catalyst, high-temperature synthesis steps lead to the synthesis process of the catalyst complex and high cost. Therefore, it is urgent to develop a method that may both reduce the potential window required by lithium supplement agent and simplify the synthesis process of catalysts.

### SUMMARY

According to various embodiments of the present application, a battery core and a preparation method therefor are provided.

A method for preparing a battery core is provided. The method includes following steps: after stacking a positive electrode sheet, a negative electrode sheet, and a separator into a stacked battery core, sequentially preforming tab welding, encapsulation, injection, formation, and vacuum-sealing on the stacked battery core, and obtaining the battery core. The positive electrode sheet is obtained by coating a positive slurry on a positive electrode current collector, and laminating and drying same. The positive slurry includes a positive electrode active material and a lithium supplement agent. After the encapsulation and before the injection, the method further includes a step of preparing a catalyst including: sequentially injecting a catalyst precursor solution into an encapsulated battery core and performing a standing treatment, applying a current or voltage to the battery core after standing, and removing the catalyst precursor solution. In a process of applying the current or voltage to the battery core after standing, a catalyst precursor in the catalyst precursor solution undergoes a reaction and adheres to a surface of the positive electrode sheet thereby forming a catalyst. The voltage ranges from -2.5 V to 0 V. The lithium supplementing agent is selected from the group consisting of Li₅FeO₄, Li₂NiO₂, Li₄SiO₄, Li₂C₄O₄, Li₂C₂O₄, and any combination thereof, the catalyst precursor solution comprises the catalyst precursor and a first solvent, the catalyst precursor is a compound of metal A, the metal A is selected from the group consisting of Mo, W, V, Fe, Co, Ni, Mn, Cr, Cu, Zn, Ce, Bi, In, and any combination thereof.

In some embodiments, in the process of applying the current or voltage to the battery core after standing, a time of applying the voltage to the battery core after standing ranges from 0.1 hours to 12 hours. Alternatively, a current density ranges from 0.5 mA·cm⁻² to 50 mA·cm⁻², and a time for applying the current to the battery core after standing ranges from 0.1 hours to 12 hours.

In some embodiments, compared with a process of sequentially performing the encapsulation, the injection and the formation on the battery core after the tab welding, a process of sequentially performing the encapsulation, preparing the catalyst, the injection, and the formation on the battery core after the tab welding leads to a decrease in a formation potential window by 0.3 V to 0.8 V.

In some embodiments, by metal ions in the catalyst precursor solution, a total molar concentration of the catalyst precursor solution ranges from 0.1 mol·L⁻¹ to 0.5 mol·L⁻¹.

In some embodiments, a mass ratio of the catalyst to the lithium supplement agent ranges from 1:99 to 30:70.

In some embodiments, a mass concentration of the lithium supplement agent in the positive slurry ranges from 2% to 3%.

In some embodiments, an electrolyte configured in the injection includes a second solvent. The step of removing the catalyst precursor solution further includes: removing a remaining catalyst precursor solution after the reaction and performing a cleaning process of sequentially injecting a third solvent into the battery core, performing a soaking treatment and removing a solvent after soaking, and repeating the cleaning process for two or three times. In some embodiments, a time of the soaking treatment ranges from 0.5 hours to 1 hour. Materials of the first solvent, the second first solvent and the third solvent are the same.

In some embodiments, a compound of metal A is selected from the group consisting of metal A halides, metal A nitrates, metal A phosphates, metal A complex salts, and any combination thereof. Alternatively, a compound of metal A is selected from the group consisting of CoCl₂, MnCl₂, Fe(NO₃)₃, WCl₆, VCl₃, Ni(NO₃)₂, Li₂CuCl₄, and any combination thereof. Alternatively, a compound of metal A is a combination of CoCl₂ and MnCl₂, and by the metal ions, a molar ratio of CoCl₂ to MnCl₂ ranges from 2:1 to 5:1. Alternatively, a compound of metal A is a combination of Fe(NO₃)₃ and WCl₆, and by the metal ions, a molar ratio of Fe(NO₃)₃ to WCl₆ ranges from 2:1 to 5:1. Alternatively, a compound of metal A is a combination of VCl₃ and Ni(NO₃)₂, and by the metal ions, a molar ratio of VCl₃ to Ni(NO₃)₂ ranges from 1:2 to 1:5.

In some embodiments, the process of applying the current or voltage to the battery core after standing is repeated for multiple times, in some embodiments, for 2 times to 5 times. The current applied in each process ranges from 20 mA·cm⁻² to 50 mA·cm⁻², and the voltage applied in each process ranges from -1.5 V to 0 V. Alternatively, a temperature of the standing treatment ranges from 50°C to 60°C, and a time of the standing treatment ranges from 12 hours to 24 hours.

A battery core is further provided in the present application. The battery core is prepared by the above preparation method.

In the method for preparing the battery core, after assembling the battery core into a house, i.e., the catalyst precursor solution is injected into the encapsulated cell. The catalyst precursor solution is performed the standing treatment to allow the catalyst precursor solution to fully infiltrate the positive electrode sheet, and then the battery core after standing is applied a current or a negative voltage (such as -2.5 V to 0 V, furthermore, the negative voltages may be -2.5 V, -2 V, -1.5 V, -1.0 V, -0.5 V or 0 V, which is not limited by the above values, other values not limited in a range of -2.5 V to 0 V are also applied), such that the catalyst precursor may directionally move under the electric field force by an applied a negative voltage or a current, and is reduced (oxidized) and loaded on the surface of the positive electrode to form a required catalyst. The catalyst interacts with the lithium supplement agent, a surface of the catalyst has a certain adsorption energy, so as to change a reaction path and reduce an activation energy, such that a delithiation reaction of the lithium supplement agent is catalyzed during the formation, a delithiation potential window is reduced, and a decomposition of an electrolyte is reduced, resulting in enhancing performances of a battery. The method described in the present application integrates a synthesis process of the catalyst with a preparation process of the battery core, so as to eliminate a requirement of an apparatus and procedures for separately preparing the catalyst, thereby simplifying preparation procedures of the catalyst and reducing costs.

Details of one or more embodiments of this application are presented in the attached drawings and descriptions below. And other features, purposes and advantages of this application will become apparent from the description, drawings and claims.

### DETAILED DESCRIPTION

It should be noted that, in an absence of conflicts, embodiments and features of the embodiments in an application may be in communication with each other. The present application is described in detail in communication with embodiments.

As analyzed in background of the present application, a problem is existed in related technology that a preparation process of catalyst required to reduce a potential window of a lithium supplement agent is complex and costly. In order to solve this problem, the application provides a battery core and a preparation method therefor.

In an embodiment of the present application, a method for preparing a battery core is provided. The method includes: after stacking a positive electrode sheet, a negative electrode sheet, and a separator into a stacked battery core, sequentially preforming tab welding, encapsulation, injection, formation, and vacuum-sealing on the stacked battery core, and obtaining the battery core. The positive electrode sheet is obtained by coating a positive slurry on a positive electrode current collector, and laminating and drying same. The positive slurry includes a positive electrode active material and a lithium supplement agent. After the encapsulation and before the injection, the method further includes a step of preparing a catalyst including sequentially injecting a catalyst precursor solution into an encapsulated battery core and performing a standing treatment, applying a current or voltage to the battery core after standing, and removing the catalyst precursor solution. **In** a process of applying the current or voltage to the battery core after standing, a catalyst precursor in the catalyst precursor solution undergoes a reaction and adheres to a surface of the positive electrode sheet thereby forming a catalyst. The voltage ranges from -2.5 V to 0 V.

**In** the method for preparing the battery core, after assembling the battery core into a house, i.e., the catalyst precursor solution is immediately injected into the encapsulated cell. The catalyst precursor solution is performed the standing treatment to allow the catalyst precursor solution to fully infiltrate the positive electrode sheet, and then the battery core after standing is applied a current or a negative voltage (such as -2.5 V to 0 V, furthermore, the negative voltages may be -2.5 V, -2 V, -1.5 V, -1.0 V, -0.5 V or 0 V, which is not limited by the above values, other values not limited in a range of -2.5 V to 0 V are also applied), such that the catalyst precursor may directionally move under the electric field force by an applied negative voltage or current, and is reduced (oxidized) and loaded on the surface of the positive electrode to form a required catalyst. The catalyst interacts with the lithium supplement agent, a surface of the catalyst has a certain adsorption energy, so as to change a reaction path and reduce an activation energy, such that a delithiation reaction of the lithium supplement agent is catalyzed during the formation, a delithiation potential window is reduced, and a decomposition of an electrolyte is reduced, resulting in enhancing performances of a battery. The method described in the present application integrates a synthesis process of the catalyst with a preparation process of the battery core, so as to eliminate a requirement of an apparatus and procedures for separately preparing the catalyst , thereby simplifying preparation procedures of the catalysts and reducing costs.

**In** an embodiment of the present application, in the process of applying the current or voltage to the battery core after standing, a time of applying the voltage to the battery core after standing ranges from 0.1 hours to 12 hours. Alternatively, a current density ranges from 0.5 mA·cm⁻² to 50 mA·cm⁻², and a time for applying the current to the battery core after standing ranges from 0.1 hours to 12 hours.

A time of the voltage applying to the battery core after standing is controlled in the above range, and in some embodiments, the time of applying the voltage ranges from 0.1 hours to 6 hours. For example, the time of applying the voltage may be 6 min, 10 min, 20 min, 30 min, 45 min, 1 hour, 2 hours, 3 hours, 4 hours, 5 hours or 6 hours, which is not limited by above values, and other values not limited in a range of 0.1 hours to 6 hours are also applied. **In** some embodiments, the time of applying the voltage to the battery core, the current and the time of applying the current to the battery core are in the above range, facilitating matching the current or the voltage with a reduction potential of the metal ions in the catalyst precursor solution, resulting in fully and rapidly converting the metal ions in the catalyst precursor solution into the catalyst on the surface of the positive electrode sheet. **In** some embodiments, the current density ranges from 20 mA·cm⁻² to 50 mA·cm⁻². For example, the current density may be 20 mA·cm⁻², 25 mA·cm⁻², 30 mA·cm⁻², 35 mA·cm⁻², 40 mA·cm⁻², 45 mA·cm⁻² or 50 mA·cm⁻², which is not limited by above values, and other values not limited in a range of 20 mA·cm⁻² to 50 mA·cm⁻² are also applied. **In** some embodiments, the time of applying the current to the battery core ranges from 0.1 hours to 10 hours. For example, the time of applying the current to the battery core may be 6 min, 10 min, 20 min, 30 min, 45 min, 1 hours, 2 hours, 3 hours, 4 hours, 5 hours, 6 hours, 7 hours, 8 hours, 9 hours or 10 hours, which is not limited by above values, and other values not limited in a range of 0.1 hours to 10 hours are also applied.

**In** some embodiments of the present application, compared with a process of sequentially performing the encapsulation, the injection and the formation on the battery core after the tab welding, a process of sequentially performing the encapsulation, preparing the catalyst, the injection, and the formation on the battery core after the tab welding leads to a decrease in a formation potential window by 0.3 V to 0.8 V.

An electrochemical synthesis method of the catalyst is integrated in a preparation method for the battery core, so as to eliminate the requirement of the apparatus and the procedures for separately preparing the catalyst, thereby simplifying the preparation procedures of the catalysts and reducing costs. **In** addition, the delithiation potential window is greatly reduced by the catalyst prepared by the above method, resulting in increasing an actual capacity and energy density of the cell. **In** some embodiments, the formation potential window may be reduced by 0.3 V to 0.55 V. For example, the formation potential window may be reduced by 0.30 V, 0.32 V, 0.34 V, 0.36 V, 0.38 V, 0.40V, 0.43 V, 0.45 V, 0.48V, 0.50 V, 0.52 V, 0.53 V or 0.55V, which is not limited by above values, and other values not limited in a range of 0.3 V to 0.55 V are also applied.

In some embodiments of the present application, by metal ions in the catalyst precursor solution, a total molar concentration of the catalyst precursor solution ranges from 0.1 mol·L⁻¹ to 0.5 mol·L⁻¹.

In some embodiments, an above total molar concentration range of the catalyst precursor solution is conducive to forming enough catalysts on the surface of the positive electrode sheet, thereby reducing the potential window of the lithium supplement agent, such that the lithium supplement agent may release lithium irons under a lower potential, and then an energy loss of the battery is reduced during a charging process. For example, the total molar concentration of the catalyst precursor may be 0.1 mol·L⁻¹, 0.2 mol·L⁻¹, 0.3 mol·L⁻¹, 0.4 mol·L⁻¹ or 0.5 mol·L⁻¹, which is not limited by above values, and other values not limited in a range of 0.1 mol·L⁻¹ to 0.5 mol·L⁻¹ are also applied.

In order to facilitate releasing the lithium ions from the lithium supplement agent at low potentials as much as possible, overall energy efficiency of the battery increases. In an embodiment of the present application, a mass ratio of the catalyst to the lithium supplement agent ranges from 1:99 to 30:70. For example, the mass ratio of the catalyst to the lithium supplement agent may be 1:99, 5:95, 10:90, 15:85, 20:80, 25:75 or 30:70, which is not limited by above values, and other values not limited in the range of 1:99 to 30:70 are also applied.

In an embodiment of the present application, the mass concentration of the above lithium supplement agent in the positive slurry may be 2% to 3%. In the present application, the lithium supplementing agent is selected from the group consisting of Li₅FeO₄, Li₂NiO₂, Li₄SiO₄, Li₂C₄O₄, Li₂C₂O₄, and any combination thereof.

In some embodiments, materials and contents of the above lithium supplement agent within the above range facilitates fully utilizing effects of the lithium supplement agent, such that the battery has a higher capacity and energy density. For example, the above mass concentration of the lithium supplement agent in the positive slurry may be 2%, 2.1%, 2.2%, 2.3%, 2.4%, 2.5%, 2.6%, 2.7%, 2.8%, 2.9% or 3%, which is not limited by above values, and other values not limited in a range of 2% to 3% are also applied.

In the present application, the catalyst precursor solution includes the catalyst precursor and a first solvent. Alternatively, an electrolyte configured in the injection includes a second solvent. The step of removing the catalyst precursor solution further includes removing a remaining catalyst precursor solution after the reaction and performing a cleaning process of sequentially injecting a third solvent into the battery core, performing a soaking treatment and removing a solvent after soaking, and in some embodiment, repeating the cleaning process for two or three times. In some embodiment, a time of the soaking treatment ranges from 0.5 hours to 1 hour. Materials of the first solvent, the second first solvent and the third solvent are the same.

In some embodiments, the above cleaning process and a control of specific washing conditions may facilitate reducing an impact of a residual catalyst precursor solution on the performance of the battery core. In some embodiments, a time of each soaking treatment facilitate a dissolution of the residual catalyst precursor within the battery core into the soaking solution. For example, the time of the soaking treatment may be 0.5 hours, 0.6 hours, 0.7 hours, 0.8 hours, 0.9 hours or 1 hour, which is not limited by above values, and other values not limited in a range of 0.5 hour to 1 hour are also applied. In some embodiments, when the materials of the first solvent, the second solvent, and the third solvent are the same, which facilitates reducing an impact of an inevitably residual catalyst precursor solution on the performance of the cell from the source.

In order to improve efficiency of converting metal ions in the catalyst precursor into a metal catalyst during the electrochemical synthesis process, in the present application, the catalyst precursor is a compound of metal A, the metal A is selected from the group consisting of Mo, W, V, Fe, Co, Ni, Mn, Cr, Cu, Zn, Ce, Bi, In, and any combination thereof. Alternatively, a compound of metal A is selected from the group consisting of metal A halides, metal A nitrates, metal A phosphates, metal A complex salts, and any combination thereof. In some embodiments, a compound of metal A is selected from the group consisting of CoCl₂, MnCl₂, Fe(NO₃)₃, WCl₆, VCl₃, Ni(NO₃)₂, Li₂CuCl₄, and any combination thereof. In some embodiments, a compound of metal A is a combination of CoCl₂ and MnCl₂. In some embodiments, by the metal ions, a molar ratio of CoCl₂ to MnCl₂ ranges from 2:1 to 5:1, for example, the molar ratio of CoCl₂ to MnCl₂ may be 2:1, 3:1, 4:1 or 5:1, which is not limited by above values, and other values not limited in the range of 2:1 to 5:1 are also applied. In some embodiments, a compound of metal A is a combination of Fe(NO₃)₃ and WCl₆. By the metal ions, a molar ratio of Fe(NO₃)₃ to WCl₆ ranges from 2:1 to 5:1, for example, the molar ratio of Fe(NO₃)₃ to WCl₆ may be 2:1, 3:1, 4:1 or 5:1, which is not limited by above values, and other values not limited in a range of 2:1 to 5:1 are also applied. In some embodiments, a compound of metal A is a combination of VCl₃ and Ni(NO₃)₂. In some embodiments, by the metal ions, a molar ratio of VCl₃ to Ni(NO₃)₂ ranges from 1:2 to 1:5, for example, the molar ratio of VCl₃ to Ni(NO₃)₂ may be 1:2, 1:3, 1:4 or 1:5, which is not limited by above values, and other values not limited in a range of 1:2 to 1:5 are also applied.

Furthermore, in some embodiments, the compound of the A metal is a combination of CoCl₂ and MnCl₂, a combination of Fe(NO₃)₃ and WCl₆, or a combination of VCl₃ and Ni(NO₃)₂, it facilitates synergistical and complementarily interaction between a formed catalyst and an inner part thereof and the lithium supplement agent, such that the catalyst exhibits superior catalytic performance.

In an embodiment of the present application, the process of applying the current or voltage to the battery core after standing is repeated for multiple times, in some embodiments, for 2 times to 5 times. The current applied in each process ranges from 20 mA·cm⁻² to 50 mA·cm⁻², for example, the current applied in each process may be 20 mA·cm⁻², 30 mA·cm⁻², 40 mA·cm⁻² or 50 mA·cm⁻², which is not limited by above values, and other values not limited in a range of 20 mA·cm⁻² to 50 mA·cm⁻² are also applied. The voltage applied in each process ranges from -1.5 V to 0 V, for example, the voltage applied in each process may be -1.5 V, -1V, -0.5 V or 0 V, which is not limited by above values, and other values not limited in a range of -1.5 V to 0 V are also applied. Alternatively, a temperature of the standing treatment ranges from 50 °C to 60 °C, for example, the temperature of the standing treatment may be 50°C, 55°C or 60°C, which is not limited by above values, and other values not limited in a range of 50 °C to 60 °C are also applied. Alternatively, a time of the standing treatment ranges from 12 hours to 24 hours, for example, the time of the standing treatment may be 12 hours, 14 hours, 16 hours, 18 hours, 20 hours, 22 hours or 24 hours, which is not limited by above values, and other values not limited in a range of 12 hours to 24 hours are also applied.

In some embodiments, the current or voltage treatment applied to the battery core after standing is repeated multiple times, it facilitates the catalyst distributing on a surface of the positive electrode sheet more evenly, resulting in improving efficiency of the catalyst catalyzing the lithium supplement agent.

**In** another embodiment of the present application, a battery core is provided. The battery core is prepared by the above preparation method.

A battery corresponding to the battery core prepared by the above preparation method has performances such as a better actual capacity and an energy density.

The following will explain the beneficial effects of the present application in communication with specific embodiments and comparative examples.

### Example 1

After a positive electrode sheet, a negative electrode sheet, and a separator being stacked into a stacked battery core, tab welding, encapsulation, injection, formation, and vacuum-sealing were sequentially preformed on the stacked battery core, and a battery core was obtained. A positive electrode sheet was obtained by coating a positive slurry on the positive electrode collector, and drying and laminating same. The positive slurry included positive electrode active materials and 0.525 g of a lithium supplement agent Li₂NiO₂. A mass concentration of the lithium supplement agent in the positive slurry was 3%. After the encapsulation and before the injection, the method further included a step of preparing the catalyst. The step of preparing the catalyst included: after assembling the battery core into a house, a solution with 80 mM of CoCl₂ and 40 mM of MnCl₂ (a lithium salt in an electrolyte was replaced by a precursor) was injected into the battery core, an account of the solution was the same as that of an injection amount, the lithium supplement agent was added to the battery core during a positive slurry mixing process, the cell was stood for 12 hours at 60°C, the battery core was applied a voltage of -1.5 V, a time of applying the voltage to the battery core was 10 min, and the precursor was converted into the catalyst and adhered to a surface of the positive electrode sheet under the negative potential. After electrochemical synthesis, an electrolyte solvent was added to the battery core to make the battery core be soaked for 3 times, each time of soaking was 0.5 hours to remove excess metal ion impurities, and a battery core with the catalyst adhered to the positive electrode sheet was obtained. The battery core with the catalyst adhered to the positive electrode sheet was sequentially performed the injection, the formation, and the vacuum-sealing to obtain a battery core.

### Example 2

After a positive electrode sheet, a negative electrode sheet, and a separator being stacked into a stacked battery core, tab welding, encapsulation, injection, formation, and vacuum-sealing were sequentially preformed on the stacked battery core, and a battery core was obtained. A positive electrode sheet was obtained by coating a positive slurry on the positive electrode collector, and drying and laminating same. The positive slurry included positive electrode active materials and 0.525g of a lithium supplement agent Li₅FeO₄. A mass concentration of the lithium supplement agent in the positive slurry was 3%. After the encapsulation and before the injection, the method further included a step of preparing the catalyst. The step of preparing the catalyst included: after assembling the battery core into a house, a solution with 80 mM of Fe(NO₃)₃ and 40 mM of WCl₆ (a lithium salt in an electrolyte was replaced by a precursor) was injected into the battery core, an account of the solution was the same as that of an injection amount, the lithium supplement agent was added to the battery core during a positive slurry mixing process, the battery core was stood for 12 hours at a high temperature, the battery core was applied a current of 30 mA·cm⁻², a time of applying the current to the battery core was 15 min, and the precursor was converted into the catalyst and adhered to a surface of the positive electrode sheet under the negative potential. After electrochemical synthesis, an electrolyte solvent was added to the battery core to make the battery core be soaked for 3 times, each time of soaking was 0.5 hours to remove excess metal ion impurities, and a battery core with the catalyst adhered to the positive electrode sheet was obtained. The battery core with the catalyst adhered to the positive electrode sheet was sequentially performed the injection, the formation, and the vacuum-sealing to obtain a battery core.

### Example 3

After a positive electrode sheet, a negative electrode sheet, and a separator being stacked into a stacked battery core, tab welding, encapsulation, injection, formation, and vacuum-sealing were sequentially preformed on the stacked battery core, and a battery core was obtained. A positive electrode sheet was obtained by coating a positive slurry on the positive electrode collector, and drying and laminating same. The positive slurry included positive electrode active materials and 0.35 g of a lithium supplement agent Li₅FeO₄. A mass concentration of the lithium supplement agent in the positive slurry was 2%. After the encapsulation and before the injection, the method further included a step of preparing the catalyst. The step of preparing the catalyst included: after assembling the battery core into a house, a solution with 40 mM of VCl₃ and 80 mM of Ni(NO₃)₂ (a lithium salt in an electrolyte was replaced by a precursor) was injected into the battery core, an account of the solution was the same as that of an injection amount, the lithium supplement agent was added to the battery core during a positive slurry mixing process, the battery core was stood for 12 hours at high temperature, the battery core was applied a current of 20 mA·cm⁻², a time of applying the current to the battery core was 5 min, the battery core was stood for 5 min, the battery core was applied a current of 20 mA·cm⁻² again, and the precursor was converted into the catalyst under the negative potential. After electrochemical synthesis, an electrolyte solvent was added to the battery core to make the battery core be soaked for 3 times, and each time of soaking was 0.5 hours to remove excess metal ion impurities, and a battery core with the catalyst adhered to the positive electrode sheet was obtained. The battery core with the catalyst adhered to the positive electrode sheet was sequentially performed the injection, the formation, and the vacuum-sealing to obtain a battery core.

### Example 4

After a positive electrode sheet, a negative electrode sheet, and a separator being stacked into a stacked battery core, tab welding, encapsulation, injection, formation, and vacuum-sealing were sequentially preformed on the stacked battery core, and a battery core was obtained. A positive electrode sheet was obtained by coating a positive slurry onto the positive electrode collector, and drying and laminating same. The positive slurry included positive electrode active materials and 0.35g of a lithium supplement agent Li₂NiO₂. A mass concentration of the lithium supplement agent in the positive slurry was 2%. After the encapsulation and before the injection, the method further included a step of preparing the catalyst. The step of preparing the catalyst included: after assembling the battery core into a house, a solution with 120 mM of Li₂CuCl₄ (a lithium salt in an electrolyte was replaced by a precursor) was injected into the battery core, an account of the solution was the same as that of an injection amount, the lithium supplement agent was added to the battery core during a positive slurry mixing process, and the battery core was stood for 12 hours at high temperature, the battery core was applied a voltage of 1.5 V, a time of applying the voltage to the battery core was 5 min, the battery core was stood for 5 min, the battery core was applied a voltage of 1.5 V again, and the precursor was converted into the catalyst and adhered to a surface of the positive electrode sheet under a positive potential. After electrochemical synthesis, an electrolyte solvent was added to the battery core to make the battery core be soaked for 3 times, each time of soaking was 0.5 hours to remove excess metal ion impurities, and a battery core with the catalyst adhered to the positive electrode sheet was obtained. The battery core with the catalyst adhered to the positive electrode sheet was sequentially performed the injection, the formation, and the vacuum-sealing to obtain a battery core.

### Example 5

The example 5 is substantially the same as the example 1, except that, in the example 5, a voltage applied to a battery core was 0 V, a time of applying the voltage to the battery core was 2 hours, a precursor was converted into a catalyst under a negative potential and adhered to a surface of a positive electrode sheet, and a battery core was prepared.

### Example 6

The example 6 is substantially the same as the example 1, except that, in the example 6, a solution was a solution with 320 mM of CoCl₂ and 160 mM of MnCl₂, a voltage applied to a battery core was -1.5 V, a time of applying the voltage to the battery core was 10 min, a precursor was converted into a catalyst under a negative potential and adhered to a surface of a positive electrode sheet, and a battery core was obtained.

### Example 7

The example 7 is substantially the same as the example 1, except that, in the example 7, a solution was a solution with 52 mM of CoCl₂ and 26 mM of MnCl₂, a voltage applied to the battery core was -1.5 V, a time of applying the voltage to the battery core was 10 min, a precursor was converted into a catalyst under a negative potential and adhered to a surface of a positive electrode sheet, and a battery core was obtained.

### Example 8

The example 8 is substantially the same as the example 1, except that, in the example 8, a solution was a solution with 100 mM of CoCl₂ and 20 mM of MnCl₂, a voltage applied to a battery core was -1.5 V, a time of applying the voltage to the battery core was 10 min, a precursor was converted into a catalyst under a negative potential and adhere to a surface of a positive electrode sheet, and a battery core was obtained.

### Example 9

The example 9 is substantially the same as the example 1, except that, in the example 9, a solution was a solution with 110 mM of CoCl₂ and 10 mM of MnCl₂, a voltage applied to a battery core was -1.5 V, a time of applying the voltage to the battery core was 10 min, a precursor was converted into a catalyst under a negative potential and adhere to a surface of a positive electrode sheet, and a battery core was obtained.

### Example 10

The example 10 is substantially the same as the example 2, except that, in the example 10, a solution was a solution with 100 mM of Fe(NO₃)₃ and 20 mM of WCl₆, a current applied to a battery core was 30 mA·cm⁻², a time of applying the current to the battery core was 15 min, a precursor was converted into a catalyst under a negative potential and adhered to a surface of a positive electrode sheet, and a battery core was obtained.

### Example 11

The example 11 is substantially the same as the example 2, except that, in the example 11, a solution was a solution with 110 mM of Fe(NO₃)₃ and 10 mM of WCl₆, a current applied to a battery core was 30 mA·cm⁻², a time of applying the current to the battery core was 15 min, a precursor was converted into a catalyst under the negative potential and adhered to a surface of a positive electrode sheet, and a battery core was obtained.

### Example 12

The example 12 is substantially the same as the example 3, except that, in the example 12, a solution was a solution with 20 mM of VCl₃ and 100 mM of Ni(NO₃)₂, a current applied to a battery core was 20 mA·cm⁻², a time of applying the current to the battery core was 5 min, the cell was stood for 5 min, the current of 20 mA·cm⁻² was applied to the battery core again, a precursor was converted into a catalyst under the negative potential and adhered to a surface of a positive electrode sheet, and a battery core was obtained.

### Example 13

The example 13 is substantially the same as the example 3, except that, in the example 13, a solution was a solution with 10 mM of VCl₃ and 110 mM of Ni(NO₃)₂, a current applied to the battery core was 20 mA·cm⁻², a time of applying the current to the battery core was 5 min, the battery core was stood for 5 min, the current of 20 mA·cm⁻² was applied to the battery core again, a precursor was converted into a catalyst under a negative potential and adhered to a surface of a positive electrode sheet, and a battery core was obtained.

### Example 14

The example 14 is substantially the same as the example 2, except that, in the example 14, a current applied to the current was 10 mA·cm⁻², a time of applying the current to the battery core was 10 hours, a precursor was converted into a catalyst under a negative potential and adhered to a surface of a positive electrode sheet, and a battery core was obtained.

### Comparative example 1

The comparative example 1 is substantially the same as the example 1, except that, in the comparative example 1, after the encapsulation and before the injection, no step of injecting a catalyst precursor solution to a battery core was required, and a battery core was prepared.

A voltage window of the above examples and the comparative example was recorded during the formation. A first charge gram capacity of the battery core obtained by the above examples and the comparative example was tested under 0.01 C, a result was listed in table 1.

| Examples/Comparative example | First charge gram capacity mAh/g | Voltage window/V |
|---|---|---|
| Example 1 | 168 | 3.86 |
| Example 2 | 179 | 3.85 |
| Example 3 | 172 | 3.88 |
| Example 4 | 163 | 3.90 |
| Example 5 | 166 | 3.86 |
| Example 6 | 168 | 3.89 |
| Example 7 | 163 | 4.10 |
| Example 8 | 167 | 3.90 |
| Example 9 | 166 | 4.08 |
| Example 10 | 177 | 3.87 |
| Example 11 | 176 | 4.06 |
| Example 12 | 170 | 3.88 |
| Example 13 | 169 | 4.07 |
| Example 14 | 178 | 3.87 |
| Comparative example 1 | 158 | 4.40 |

From above description, it could be noted that, the examples of the present application realize following technology effect: after assembling the battery core into a house, i.e., the catalyst precursor solution was injected into the encapsulated cell. The catalyst precursor solution was performed the standing treatment to allow the catalyst precursor solution to fully infiltrate the positive electrode sheet, and then the battery core after standing was applied a current or a negative voltage (such as -2.5 V to 0 V, furthermore, the negative voltages may be -2.5 V, -2 V, -1.5 V, -1.0 V, -0.5 V or 0 V, which was not limited by the above values, and other values not limited in a range of -2.5 V to 0 V were also applied), such that the catalyst precursor might directionally move under the electric field force by an applied negative voltage or current, and was reduced (oxidized) and loaded on the surface of the positive electrode to form a required catalyst. The catalyst interacted with the lithium supplement agent, the surface of the catalyst had a certain adsorption energy, so as to change a reaction path and reduce the activation energy, such that the delithiation reaction of the lithium supplement agent was catalyzed during the formation, a delithiation potential window was reduced, and a decomposition of an electrolyte was reduced, resulting in enhancing a performance of a battery. The method described in the present application integrated the synthesis process of the catalyst with the preparation process of the battery core, so as to eliminate the requirement of the apparatus and the procedures for separately preparing the catalyst separately preparing the catalyst, thereby simplifying preparation procedures of the catalysts and reducing costs.

The above examples are only some embodiments of the present application and are not intended to limit the present application. For skilled in art, the present invention may have various modifications and variations. Any modifications, equivalent substitutions, improvements, and so on made within a spirit and principles of the present application shall be included within the scope of protection of the present invention.

## Claims

1. A method for preparing a battery core, comprising following steps: after stacking a positive electrode sheet, a negative electrode sheet, and a separator into a stacked battery core, sequentially preforming tab welding, encapsulation, injection, formation, and vacuum-sealing on the stacked battery core, and obtaining the battery core, wherein the positive electrode sheet is obtained by coating a positive slurry on a positive electrode current collector, and laminating and drying same, the positive slurry comprises a positive electrode active material and a lithium supplement agent, **characterized in that** after the encapsulation and before the injection, the method further comprises a step of preparing a catalyst comprising:
sequentially injecting a catalyst precursor solution into an encapsulated battery core and performing a standing treatment, applying a current or voltage to the battery core after standing, and removing the catalyst precursor solution,
wherein in a process of applying the current or voltage to the battery core after standing, a catalyst precursor in the catalyst precursor solution undergoes a reaction and adheres to a surface of the positive electrode sheet thereby forming a catalyst, and
the voltage ranges from -2.5 V to 0 V,
the lithium supplementing agent is selected from the group consisting of Li₅FeO₄, Li₂NiO₂, Li₄SiO₄, Li₂C₄O₄, Li₂C₂O₄, and any combination thereof,
the catalyst precursor solution comprises the catalyst precursor and a first solvent,
the catalyst precursor is a compound of metal A, the metal A is selected from the group consisting of Mo, W, V, Fe, Co, Ni, Mn, Cr, Cu, Zn, Ce, Bi, In, and any combination thereof.

2. The method of claim 1, wherein in the process of applying the current or voltage to the battery core after standing, a time of applying the voltage to the battery core after standing ranges from 0.1 hours to 12 hours.

3. The method of claim 1, wherein in the process of applying the current or voltage to the battery core after standing, a current density ranges from 0.5 mA·cm⁻² to 50 mA·cm⁻², and a time for applying the current to the battery core after standing ranges from 0.1 hours to 12 hours.

4. The method of claim 1, wherein compared with a process of sequentially performing the encapsulation, the injection and the formation on the battery core after the tab welding, a process of sequentially performing the encapsulation, preparing the catalyst, the injection, and the formation on the battery core after the tab welding leads to a decrease in a formation potential window by 0.3 V to 0.8 V.

5. The method of any one of claim 1 to claim 4, wherein by metal ions in the catalyst precursor solution, a total molar concentration of the catalyst precursor solution ranges from 0.1 mol·L⁻¹ to 0.5 mol·L⁻¹.

6. The method of any one of claim 1 to claim 4, wherein a mass ratio of the catalyst to the lithium supplement agent ranges from 1:99 to 30:70.

7. The method of any one of claim 1 to claim 4, wherein a mass concentration of the lithium supplement agent in the positive slurry ranges from 2% to 3%.

8. The method of any one of claim 1 to claim 4, wherein an electrolyte configured in the injection comprises a second solvent;
the step of removing the catalyst precursor solution further comprises:
removing a remaining catalyst precursor solution after the reaction and performing a cleaning process of sequentially injecting a third solvent into the battery core, performing a soaking treatment and removing a solvent after soaking;
and repeating the cleaning process for two or three times, wherein a time of the soaking treatment ranges from 0.5 hours to 1 hour, and
materials of the first solvent, the second first solvent and the third solvent are the same.

9. The method of any one of claim 1 to claim 4, wherein a compound of metal A is selected from the group consisting of metal A halides, metal A nitrates, metal A phosphates, metal A complex salts, and any combination thereof.

10. The method of any one of claim 1 to claim 4, wherein a compound of metal A is selected from the group consisting of CoCl₂, MnCl₂, Fe(NO₃)₃, WCl₆, VCl₃, Ni(NO₃)₂, Li₂CuCl₄, and any combination thereof.

11. The method of any one of claim 1 to claim 4, wherein a compound of metal A is a combination of CoCl₂ and MnCl₂, wherein by the metal ions, a molar ratio of CoCl₂ to MnCl₂ ranges from 2:1 to 5:1.

12. The method of any one of claim 1 to claim 4, wherein a compound of metal A is a combination of Fe(NO₃)₃ and WCl₆, wherein by the metal ions, a molar ratio of Fe(NO₃)₃ to WCl₆ ranges from 2:1 to 5:1.

13. The method of any one of claim 1 to claim 4, wherein a compound of metal A is a combination of VCl₃ and Ni(NO₃)₂, wherein by the metal ions, a molar ratio of VCl₃ to Ni(NO₃)₂ ranges from 1:2 to 1:5.

14. The method of any one of claim 1 to claim 4, wherein the step of preparing the catalyst comprising further comprising: repeating the process of applying the current or voltage to the battery core after standing for mutiple times, wherein repeating times ranges from 2 times to 5 times, the current applied in each process ranges from 20 mA·cm⁻² to 50 mA·cm⁻², and the voltage applied in each process ranges from -1.5 V to 0 V;
and/or a temperature of the standing treatment ranges from 50°C to 60°C, a time of the standing treatment ranges from 12 hours to 24 hours.

15. A battery core, **characterized by** being prepared by the method of any one of claim 1 to claim 14.

## Amended claims

### Amended claims in accordance with Rule 137(2) EPC.

1. A method for preparing a battery core, comprising following steps: after stacking a positive electrode sheet, a negative electrode sheet, and a separator into a stacked battery core, sequentially preforming tab welding, encapsulation, injection, formation, and vacuum-sealing on the stacked battery core, and obtaining the battery core, wherein the positive electrode sheet is obtained by coating a positive slurry on a positive electrode current collector, and laminating and drying same, the positive slurry comprises a positive electrode active material and a lithium supplement agent, **characterized in that** after the encapsulation and before the injection, the method further comprises a step of preparing a catalyst comprising:
sequentially injecting a catalyst precursor solution into an encapsulated battery core and performing a standing treatment, applying a current or voltage to the battery core after standing, and removing the catalyst precursor solution,
wherein in a process of applying the current or voltage to the battery core after standing, a catalyst precursor in the catalyst precursor solution undergoes a reaction and adheres to a surface of the positive electrode sheet thereby forming a catalyst, and
the voltage ranges from -2.5 V to 0 V,
the lithium supplementing agent is selected from the group consisting of Li₅FeO₄, Li₂NiO₂, Li₄SiO₄, Li₂C₄O₄, Li₂C₂O₄, and any combination thereof,
the catalyst precursor solution comprises the catalyst precursor and a first solvent,
the catalyst precursor is a compound of metal A, the metal A is selected from the group consisting of Mo, W, V, Fe, Co, Ni, Mn, Cr, Cu, Zn, Ce, Bi, In, and any combination thereof,
wherein in the process of applying the current or voltage to the battery core after standing, a current density ranges from 0.5 mA·cm⁻² to 50 mA·cm⁻², and a time for applying the current to the battery core after standing ranges from 0.1 hours to 12 hours.

2. The method of claim 1, wherein in the process of applying the current or voltage to the battery core after standing, a time of applying the voltage to the battery core after standing ranges from 0.1 hours to 12 hours.

3. The method of claim 1, wherein compared with a process of sequentially performing the encapsulation, the injection and the formation on the battery core after the tab welding, a process of sequentially performing the encapsulation, preparing the catalyst, the injection, and the formation on the battery core after the tab welding leads to a decrease in a formation potential window by 0.3 V to 0.8 V.

4. The method of any one of claim 1 to claim 3, wherein by metal ions in the catalyst precursor solution, a total molar concentration of the catalyst precursor solution ranges from 0.1 mol·L⁻¹ to 0.5 mol·L⁻¹.

5. The method of any one of claim 1 to claim 3, wherein a mass ratio of the catalyst to the lithium supplement agent ranges from 1:99 to 30:70.

6. The method of any one of claim 1 to claim 3, wherein a mass concentration of the lithium supplement agent in the positive slurry ranges from 2% to 3%.

7. The method of any one of claim 1 to claim 3, wherein an electrolyte configured in the injection comprises a second solvent;
the step of removing the catalyst precursor solution further comprises:
removing a remaining catalyst precursor solution after the reaction and performing a cleaning process of sequentially injecting a third solvent into the battery core, performing a soaking treatment and removing a solvent after soaking;
and repeating the cleaning process for two or three times, wherein a time of the soaking treatment ranges from 0.5 hours to 1 hour, and
materials of the first solvent, the second first solvent and the third solvent are the same.

8. The method of any one of claim 1 to claim 3, wherein a compound of metal A is selected from the group consisting of metal A halides, metal A nitrates, metal A phosphates, metal A complex salts, and any combination thereof.

9. The method of any one of claim 1 to claim 3, wherein a compound of metal A is selected from the group consisting of CoCl₂, MnCl₂, Fe(NO₃)₃, WCl₆, VCl₃, Ni(NO₃)₂, Li₂CuCl₄, and any combination thereof.

10. The method of any one of claim 1 to claim 3, wherein a compound of metal A is a combination of CoCl₂ and MnCl₂, wherein by the metal ions, a molar ratio of CoCl₂ to MnCl₂ ranges from 2:1 to 5:1.

11. The method of any one of claim 1 to claim 3, wherein a compound of metal A is a combination of Fe(NO₃)₃ and WCl₆, wherein by the metal ions, a molar ratio of Fe(NO₃)₃ to WCl₆ ranges from 2:1 to 5:1.

12. The method of any one of claim 1 to claim 3, wherein a compound of metal A is a combination of VCl₃ and Ni(NO₃)₂, wherein by the metal ions, a molar ratio of VCl₃ to Ni(NO₃)₂ ranges from 1:2 to 1:5.

13. The method of any one of claim 1 to claim 3, wherein the step of preparing the catalyst comprising further comprising: repeating the process of applying the current or voltage to the battery core after standing for mutiple times, wherein repeating times ranges from 2 times to 5 times, the current applied in each process ranges from 20 mA·cm⁻² to 50 mA·cm⁻², and the voltage applied in each process ranges from -1.5 V to 0 V;
and/or a temperature of the standing treatment ranges from 50°C to 60°C, a time of the standing treatment ranges from 12 hours to 24 hours.

14. A battery core, **characterized by** being prepared by the method of any one of claim 1 to claim 13.
